# EUROPEAN PATENT SPECIFICATION

(11) **EP 0 475 368 B1**
(45) Date of publication and mention of the grant of the patent: **12.11.1997**
(21) Application number: 91115309.6
(22) Date of filing: 10.09.1991
(51) Int. Cl.: C08K 5/00, C08K 13/02

(54) **Self-extinguishing polymeric compositions**
Selbstverlöschende polymere Zusammensetzungen
Compositions polymériques auto-extinctrices

(30) Priority: 11.09.1990 IT 2142190
(43) Date of publication of application: 18.03.1992
(73) Proprietor: MINISTERO DELL' UNIVERSITA' E DELLA RICERCA SCIENTIFICA E TECNOLOGICA, 00196 Roma (IT)
(72) Inventor: Cipolli, Roberto, Dr., I-28100 Novara (IT); Nucida, Gilberto, I-20098 San Giuliano Milanese, Milan (IT); Masarati, Enrico, Dr., I-29010 Castelnuovo Valtidone, Piacenza (IT); Oriani, Roberto, I-20137 Milan (IT); Pirozzi, Mario, Dr., I-20097 San Donato Milanese, Milan (IT)
(74) Representative: Barz, Peter, Dr.

(56) References cited:
- EP-A- 0 115 871
- EP-A- 0 406 810

## Description

The present invention relates to self-extinguishing polymeric compositions based on thermoplastic polymers and/or polymers endowed with elastomeric properties, especially olefinic polymers and copolymers, which compositions comprise specific triazine derivatives in combination with ammonium and/or amine phosphates and/or ammonium and/or amine phosphonates.

Several methods of reducing or eliminating the combustibility of polymers are known in the art. Some of said methods are based on the use of metal compounds, in particular on antimony, bismuth or arsenic, in combination with partially halogenated, thermally unstable organic compounds, such as chlorinated paraffin waxes.

Other methods are based on the use of substances capable of yielding intumescence. The formulations of the intumescent type generally are composed of the polymer and at least three main additives, i.e., an essentially phosphorus-containing additive, whose purpose is to form, during the combustion, an impermeable, semi-solid and vitreous layer essentially composed of polyphosphoric acid and to activate the process of formation of intumescence; a second additive, containing nitrogen, which is to serve as foaming agent; and a third, carbon-containing additive, which acts as a carbon donor in order to allow an insulting cellular carbonaceous layer ("char") to be formed between the polymer and the flame.

Examples of intumescent formulations of said type may be found in US-A-3,810,862 (Phillips Petroleum Co.; based on melamine, pentaerythritol and ammonium polyphosphate); US-A-4,727,102 (Vamp S.r.l.; based on melamine cyanurate, a hydroxyalkyl derivate of isocyanuric acid and ammonium polyphosphate); and WO-85/05626 (Plascoat U.K. Limited; on the basis of various phosphorus and nitrogen compounds among which, in particular, a combination of melamine phosphate, pentaerythritol and ammonium polyphosphate may be mentioned).

In more recent formulations, together with an organic or inorganic phosphorus compound, a nitrogen-containing organic compound was used, generally consisting of an aminoplastic resin obtained by means of condensation of urea, melamine or dicyandiamide with formaldehyde.

Examples of formulations containing two additives are those described in US-A-4,504,610 (Montedison S.p.A.; based on oligomeric derivatives of 1,3,5-triazine and ammonium polyphosphate) and EP-A-14,463 (Montedison S.p.A.; based on organic compounds selected from benzylguanamine and reaction products of aldehydes and several cyclic nitrogen compounds, in particular benzylguanamine-formaldehyde copolymers, and ammonium polyphosphate).

Self-extinguishing compositions can also be obtained by using single-component additives, which contain in their organic molecule both nitrogen and phosphorus atoms, as disclosed in US-A-4,201,705 (Borg-Warner Corp.).

These intumescent flame retardant systems endow the polymers to which they are added with the property of forming a carbonaceous residue when they burn or are exposed to a flame. This kind of flame-retardant system offers numerous advantages, i.e., absence of corrosion phenomena in the machinery in which the polymers are processed, a lower emission of smokes as compared to systems containing metal compounds and halogenated hydrocarbons, and, above all, the possibility of endowing the polymers with satisfactory flame-proof properties with a smaller amount of total additive and therefore without excessively impairing the mechanical properties thereof.

It has now surprisingly been found that polymeric compositions showing very good anti-flame properties may be obtained by adding a certain class of 2,4-diamino-6-hydroxy-1,3-5-triazine derivatives to the corresponding polymers, the effectiveness of said derivatives being higher than that of the products known from the prior art.

More specifically the compositions of the present invention comprise:
a) from 91 to 40, preferably 88 to 60, parts by weight of thermoplastic polymer and/or of polymer having elastomeric properties;
b) from 6 to 33, preferably 8 to 30, parts by weight of one or more ammonium and/or amine phosphates and/or phosphonates;
c) from 3 to 27, preferably 4 to 20, parts by weight of one or more compounds derived from 2,4-diamino-6-hydroxy-1,3,5-triazine and having the general formula (I): 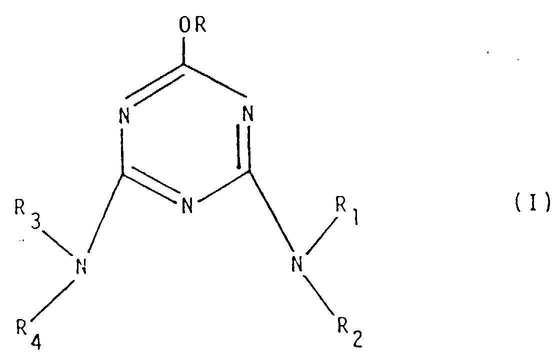
wherein:
R = H; (C₂-C₆)-alkenyl; (C₆-C₁₂)-cycloalkyl; (C₆-C₁₂)-alkylcycloalkyl; (C₆-C₁₂)-aryl; (C₇-C₁₂)-aralkyl; and ⁅CₙH₂ₙ⁆X, n being an integer of from 1 to 8, preferably from 1 to 4 and X being selected from H; CN; -O-(C₁-C₄)-alkyl;-O-(C₂-C₄)-alkenyl; (C₆-C₁₂)-cycloalkyl; (C₆-C₁₂)-alkylcycloalkyl;-O-(C₆-C₁₂)-aryl; moieties -N(R₅)₂ wherein the groups R₅, the same or different from each other, represent (C₁-C₄)-alkyl or (C₃-C₄)-alkenyl; or the moiety -N(R₅)₂ is replaced by an N-heterocyclic radical which optionally contains another heteroatom (preferably selected from O, N and S) and is linked to the alkyl chain through the nitrogen atom; (X being preferably H); at least one of the groups R₁, R₂, R₃ and R₄ is selected from: ⁅CₘH₂ₘ⁆O-R₆; 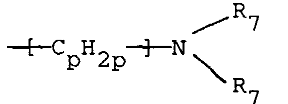 wherein
- m =: an integer of from 2 to 8, preferably from 2 to 4;
- p =: an integer of from 2 to 6;
- R₆ =: H; (C₁-C₈)-, preferably (C₁-C₄)-alkyl; (C₂-C₆)-alkenyl; ⁅C_{q}H_{2q}⁆O-R₈, wherein q is an integer of from 1 to 4 and R₈ is hydrogen or (C₁-C₄)-alkyl; (C₆-C₁₂)-cycloalkyl or (C₆-C₁₂)-alkylcycloalkyl;
the groups R₇, the same or different from each other, represent H; (C₁-C₈)-alkyl; (C₂-C₆)-alkenyl; (C₁-C₄)-hydroxyalkyl; (C₆-C₁₂)-cycloalkyl and (C₆-C₁₂)-alkylcycloalkyl;
or the moiety -N(R₇)₂ is replaced by an N-heterocyclic radical which optionally contains another heteroatom (preferably selected from O, N and S) and is linked to the alkyl chain through the nitrogen atom;
or in general formula (I) at least one of the moieties -NR₁R₂ and -NR₃R₄ is replaced by a N-heterocyclic radical which optionally contains another heteroatom (preferably selected from O, N and S) and is linked to the triazine ring through the nitrogen atom;
the remaining groups R₁ to R₄, the same or different from each other, having the meanings mentioned above or being selected from H; (C₁-C₁₈)-alkyl; (C₂-C₈)-alkenyl; (C₆-C₁₆)-cycloalkyl and (C₆-C₁₆)-alkylcycloalkyl, optionally substituted by a hydroxy or(C₁-C₄)-hydroxyalkyl group.

The above compounds of general formula (I), besides having a simple structure and being obtainable by attaching a suitable substituent selected from those described hereinafter to 2,4-diamino-6-hydroxy-1,3,5-triazine which as such is unable to endow the above polymers with self-extinguishing properties are particularly heat-stable and therefore maintain a high flame-retardant activity also after a heat processing of the polymeric compositions containing them.

Furthermore, the compositions of the present invention show the advantage of resulting, in the event of a fire, in a very low and not darkening smoke emission.

Specific examples of the group R in general formula (I) are methyl; ethyl; propyl; isopropyl; n-butyl; isobutyl; tert-butyl; n-pentyl; isopentyl; n-hexyl; tert-hexyl; octyl; tert-octyl; ethenyl; propenyl; butenyl; isobutenyl; hexenyl; cyclohexyl; propylcyclohexyl; butylcyclohexyl; phenyl; benzyl; 2-phenyl-ethyl; cyanomethyl; 2-cyanoethyl; 2-methoxyethyl; 2-methoxypropyl; 3-ethoxypropyl; 4-ethoxybutyl; 5-ethoxypentyl; 6-methoxyhexyl; 7-methoxyheptyl; 7-methoxyoctyl; 2-ethoxyethyl; 3-ethoxypropyl; 4-ethoxybutyl; 5-ethoxypentyl; 2-cyclohexyloxyethyl; 2-ethenyloxyethyl; 2-phenoxyethyl; 2-(N,N-dimethylamino)ethyl; 3-(N,N-dimethylamino)propyl; 5-(N,N-dimethylamino)pentyl; 5-(N,N-dimethylamino)pentyl; 6-(N,N-dimethylamino)hexyl; 4-(N,N-diethylamino)butyl; 5-(N,N-diethylamino)pentyl; 2-(N,N-dipropylamino)ethyl; 2-(N-methyl-N-1-propenylamino)ethyl; 4-(N,N-diethylamino)butyl; 5-(N,N-diethylamino)pentyl; 2-(N,N-di-1-propenylamino)ethyl; 4-(N,N-di-1-propenylamino)butyl.

Specific examples of groups R₁ to R₄ in general formula (I) are methyl; ethyl; propyl, isopropyl; n-butyl; isobutyl; tert-butyl; n-pentyl; isopentyl; n-hexyl; tert-hexyl; octyl; tert-octyl; decyl; dodecyl; octadecyl; ethenyl; propenyl; butenyl; isobutenyl; hexenyl; octenyl; cyclohexyl; propylcyclohexyl; butylcyclohexyl; decylcyclohexyl; hydroxycyclohexyl; hydroxyethylcyclohexyl; 2-hydroxyethyl; 2-hydroxypropyl; 3-hydroxypropyl; 3-hydroxybutyl; 4-hydroxybutyl; 3-hydroxypentyl; 5-hydroxypentyl; 6-hydroxyhexyl; 3-hydroxy-2,5-dimethylhexyl; 7-hydroxyheptyl; 7-hydroxyoctyl; 2-methoxyethyl; 2-methoxypropyl; 3-methoxypropyl; 4-methoxybutyl; 6-methoxyhexyl; 7-methoxyheptyl; 7-methoxyoctyl; 2-ethoxyethyl; 3-ethoxypropyl; 4-ethoxybutyl; 3-propoxypropyl; 3-butoxypropyl; 4-butoxybutyl; 4-isobutoxybutyl; 5-propoxypentyl; 2-cyclohexyloxyethyl; 2-ethenyloxyethyl; 2-(N,N-dimethylamino)ethyl; 3-(N,N-dimethylamino)propyl; 4-(N,N-dimethylamino)butyl; 5-(N,N-dimethylamino)pentyl; 4-(N,N-diethylamino)butyl; 5-(N,N-diethylamino)pentyl; 5-(N,N-diisopropylamino)pentyl; 3-(N-ethylamino)-propyl; 4-(N-methylamino)butyl; 4-(N,N-dipropylamino)butyl; 2-(N,N-diisopropylamino)ethyl; 6-(N-hexenylamino)hexyl; 2-(N-ethenylamino)ethyl; 2-(N-cyclohexylamino)ethyl; 2-(N-2-hydroxyethylamino)ethyl; 2-(2-hydroxyethoxy)ethyl; 2-(2-methoxyethoxy)ethyl; 6-(N-propylamino)hexyl.

Specific examples of heterocyclic radicals which may replace the moieties -NR₁R₂ and -NR₃R₄ in general formula (I) are aziridyl, pyrrolidyl, piperidyl; morpholyl; thiomorpholyl, piperazyl; 4-methylpiperazyl; 4-ethylpiperazyl; 2-methylpiperazyl; 2,5-dimethylpiperazyl; 2,3,5,6-tetramethylpiperazyl; 2,2,5,5-tetramethylpiperazyl; 2-ethylpiperazyl; 2,5-diethylpiperazyl.

Specific examples of heterocyclic radicals which can replace the moiety -N(R₅)₂ are pyrrolidyl; piperidyl; morpholyl; thiomorpholyl; piperazyl; 4-methylpiperazyl and 4-ethylpiperazyl.

Specific examples of heterocyclic radicals which can replace the moiety -N(R₇)₂ are aziridyl; pyrrolidyl; piperidyl; morpholyl; thiomorpholyl; piperazyl; 4-methylpiperazyl and 4-ethylpiperazyl.

Particularly preferred are the compounds of general formula (I) wherein R is hydrogen.

Compounds of general formula (I) can be prepared from the intermediates of general formula (II): 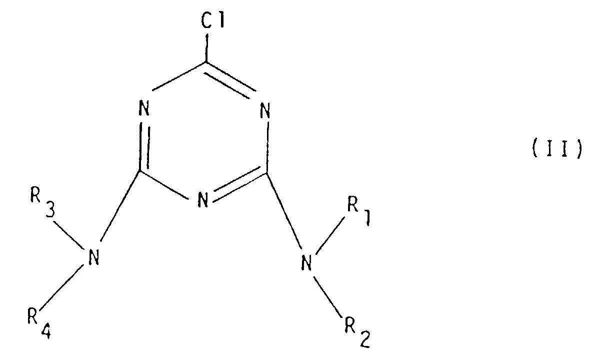 wherein R₁ to R₄ have the previously defined meaning, according to the following modalities:
a) when R is hydrogen by hydrolysis, either with an acid (such as hydrochloric acid, hydrobromic acid, sulfuric acid or phosphoric acid) at temperatures of e.g. from 60 to 100°C, or with a base (such as sodium hydroxide or potassium hydroxide), at temperatures of e.g. from 100 to 180°C;
b) when R is different from hydrogen, by a condensation reaction with a compound of general formula (III):

   R-OH (III)

   wherein R has the previously defined meanings, in a solvent (such as toluene, xylene or ortho-dichlorobenzene) and/or in an excess of compound (III) if the latter can act as solvent (e.g., in the case of methanol or ethanol) and in the presence of a base (such as sodium hydroxide, potassium hydroxide or sodium metal) at temperatures of e.g. from 60 to 150°C.

The product formed can easily be separated from the reaction mass by filtration.

Generally products of general formula (I) of good quality and being in the form of a white crystalline powder are obtained which can be used in the present self-extinguishing compositions without any further purification.

The intermediates of general formula (II) can easily be synthesized by reacting a halide of cyanuric acid, e.g., the chloride, at a temperature of e.g. from 0 to 10°C and in a solvent (such as acetone, water or methylene chloride) with an amine or general formula (IV): 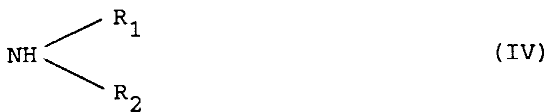 wherein R₁ and R₂ have the previously defined meaning. Said reaction may be carried out in the presence or absence (depending on the molar ratio used) of an acidity acceptor (such as NaOH, NaHCO₃, Na₂CO₃ or triethylamine) and yields the intermediate of general formula (V): 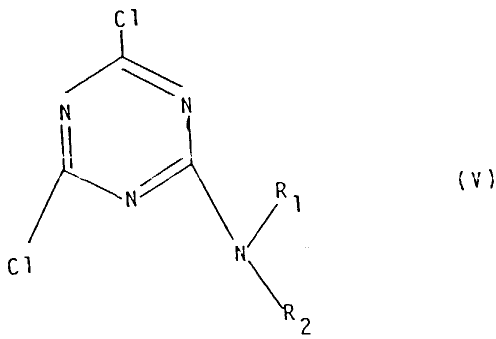 This intermediate, either separated or not, is then allowed to react under conditions analogous to the preceding ones, but at a higher temperature, for instance of from 10 to 50°C, with an amine of general formula (VI): 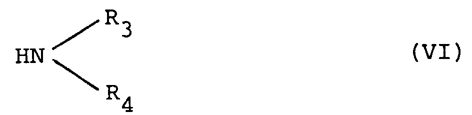 wherein R₃ and R₄ have the previously defined meanings.

If it is desired to obtain derivatives of the general formula (I) wherein -NR₁R₂ = - NR₃R₄, one mol of the halide of cyanuric acid is allowed to react with two mols (in the presence of an acidity acceptor) or four mols (in the absence of the acidity acceptor) of an amine of general formula (IV) above under conditions analogous to those described previously.

An alternative method for obtaining compounds of general formula (I) wherein R is different from hydrogen, comprises the reaction of a halide of cyanuric acid, e.g., the chloride, with a derivative of general formula (III), e.g. at 10 to 110°C in a suitable solvent (such as acetone, methylene chloride, toluene or xylene) and/or in an excess of the reagent of general formula (III) if the latter can act as solvent (as in the case of methanol or ethanol) and in the presence of an acidity acceptor (such as NaHCO₃, Na₂CO₃, NaOH, triethylamine or collidine), whereby the intermediate of general formula (VII): 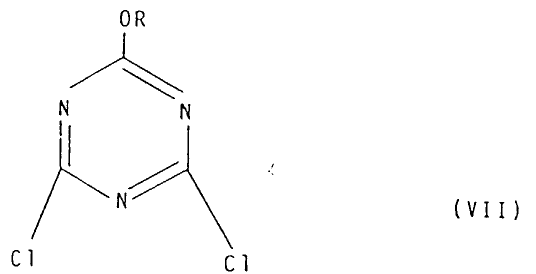 wherein R has the previously defined meanings, is obtained.

This intermediate, either separated or not, is allowed to react with an amine of general formula (IV) under conditions analogous to the preceding ones, but at temperatures of from e.g. -5 to 30°C, to give the intermediate of general formula (VIII): 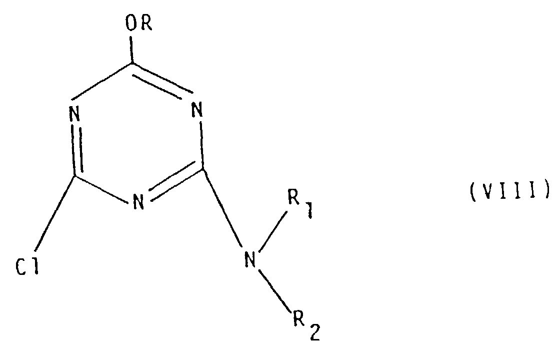 wherein R, R₁ and R₂ have the previously defined meanings.

This intermediate, either separated or not, is allowed to react again under conditions analogous to the preceding ones, but at a higher temperature (for instance 40 to 120°C) and therefore with a solvent also compatible with these temperatures (such as water, toluene or xylene) with an amine of general formula (VI) thus affording compounds of general formula (I).

If compounds of general formula (I) are desired wherein R is different from hydrogen also in this case, and -NR₁R₂ = -NR₃R₄, one mole of the intermediate of general formula (VII) is allowed to react with two mols (in the presence of an acidity acceptor) or with four mols (in absence of an acidity acceptor) of an amine of general formula (IV) under conditions analogous to those previously described.

From compounds of general formula (I) wherein R is different from hydrogen (and is preferably (C₁-C₄)-alkyl) it is possible to obtain derivatives of general formula (I) wherein R is hydrogen, by hydrolysis reaction either with an acid (working at temperatures of e.g. from 80 to 140°C) or with a base (working at temperatures of e.g. from 100 to 180°C), using the same reagents as given for the hydrolysis of intermediates of general formula (II).

Among the phosphates, ammonium polyphosphates of the general formula

(NH₄)ₙ₊₂PₙO₃ₙ₊₁

wherein n is an integer equal to, or greater than, 2, are preferred. The molecular weight of the polyphosphates should be high enough to secure a low solubility in water.

For exemplary purposes, n preferably is comprised within the range of from 2 to 500.

The composition of the polyphosphates having the formula indicated hereinabove, in which n is a high enough number, and preferably ranges from 5 to 500, practically corresponds to a metaphosphate of formula

(NH₄PO₃)ₙ.

An example of said polyphosphates is the product known under the trade name "Exolit ® 422" (Hoechst), having the composition (NH₄PO₃)ₙ in which n is greater than 50. Another example is the product known under the name "Phos-Chek ® P/30" (Monsanto Chemical) which has a similar composition.

Another polyphosphate which can be used advantageously, above all thanks to its low solubility in water, is the product known under the trade name "Exolit ® 462" (Hoechst) which is "Exolit ® 422" microencapsulated in melamine-formaldehyde resin.

Other phosphates which can be used are those which are derived from amines, such as, e.g., dimethyl ammonium phosphate or diethyl ammonium phosphate, ethylene diamine phosphate, melamine orthophosphate or melamine pyrophosphate.

Good results may also be obtained by using mono- or polyammonium phosphonates selected from the salts derived from mono-or polyphosphonic acids.

Examples of said acids are:
ethane-1,1,2-triphosphonic acid, 2-hydroxy-ethane-1,1,2-triphosphonic acid, propane-1,2,3-triphosphonic acid, methylphosphonic acid, ethylphosphonic acid, n-propylphosphonic acid, n-butylphosphonic acid, phenylphosphonic acid, 1-amino-ethane-1,1-diphosphonic acid, 1-hydroxy-ethane-1,1-diphosphonic acid, 1-hydroxy-dodecane-1,1-diphosphonic acid, phosphonoacetic acid, 2-phosphonopropionic acid, 3-phosphonopropionic acid, 2-phosphonobutyric acid, 4-phosphonobutyric acid, amine tri(methylenephosphonic) acid, ethylenediamine penta(methylenephosphonic) acid, hexamethylene diamine tetra(methylenephosphonic) acid and diethylene triamine penta(methylenephosphonic) acid.

Among the polymers which can be used in the compositions according to the present invention, preferred are polymers and copolymers of olefins of general formula

R' - CH = CH₂

wherein R' is hydrogen or a (C₁₋₈)-alkyl or (C₆₋₁₀)-aryl radical, in particular:
(1) isotactic or prevailingly isotactic polypropylene;
(2) HDPE, LLDPE and LDPE polyethylene;
(3) crystalline copolymers of propylene and minor amounts of ethylene and/or of other alpha-olefins, such as, e.g., 1-butene, 1-hexene, 1-octene, 4-methyl-1-pentene;
(4) heterophasic compositions comprising (A) a fraction constituted by a propylene homopolymer, or by one of the copolymers defined under (3); and (B) a copolymeric fraction constituted by elastomeric copolymers of ethylene and an alpha-olefin, optionally containing minor proportions of one or more dienes, wherein the alpha-olefin is preferably selected from propylene and 1-butene; and
(5) elastomeric copolymers of ethylene and alpha-olefin(s), optionally containing minor proportions of one or more dienes.

Examples of dienes more commonly contained in said elastomeric copolymers are butadiene, ethylidene-norbornene and hexadiene-1,4.

Among the polymers of olefins of general formula R'-CH=CH₂ wherein R' is an aryl radical, "crystal" and impact-resistant polystyrene are preferred.

Other examples of polymers which can be used are acrylonitrile/butadiene/styrene terpolymers (ABS); styrene/acrylonitrile copolymers (SAN); polyurethanes (of polyester or polyether grade); poly(ethylene terephthalate); poly(butylene terephthalate) and polyamides.

The self-extinguishing compositions according to the present invention can be prepared according to methods known in the art. For example, ammonium and/or amine phosphate and/or phosphonate is first intimately mixed with one or more finely ground nitrogen-containing compounds of general formula (I) (the particles of which generally are smaller than 70 µm) and the thus obtained mixture is added to the polymer in a turbo-mixer, in order to generate a homogeneous mixture which is either extruded or granulated. The thus obtained granular product can be transformed into various finished articles according to any of the well-known moulding techniques.

The fire-retardant additives according to the present invention are also suitable for use in the field of flame-retardant paints.

Compounds comprised in the general formula (I), besides those exemplified, which can advantageously be used in the polymeric compositions of the present invention are those listed in Table 1 below.

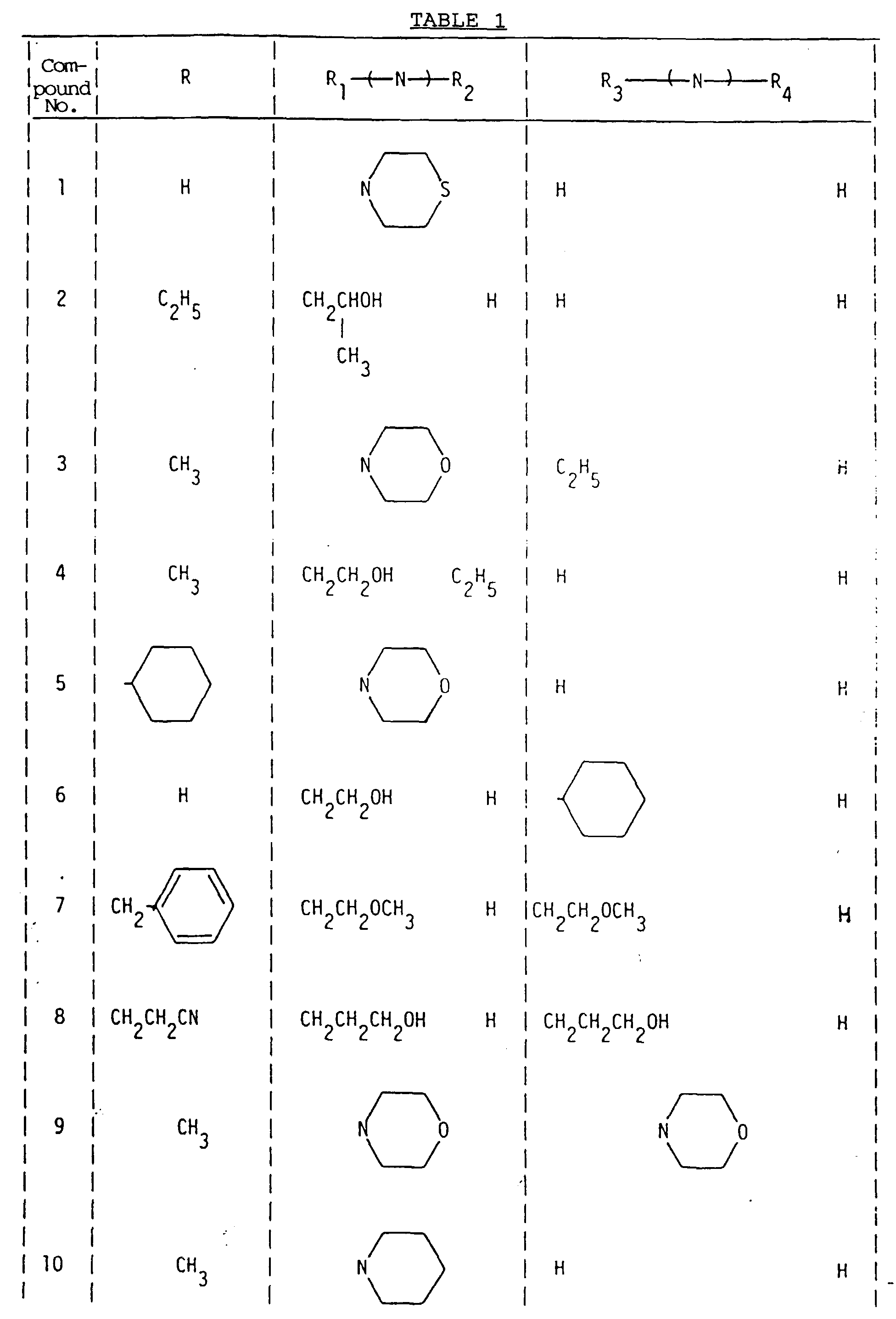

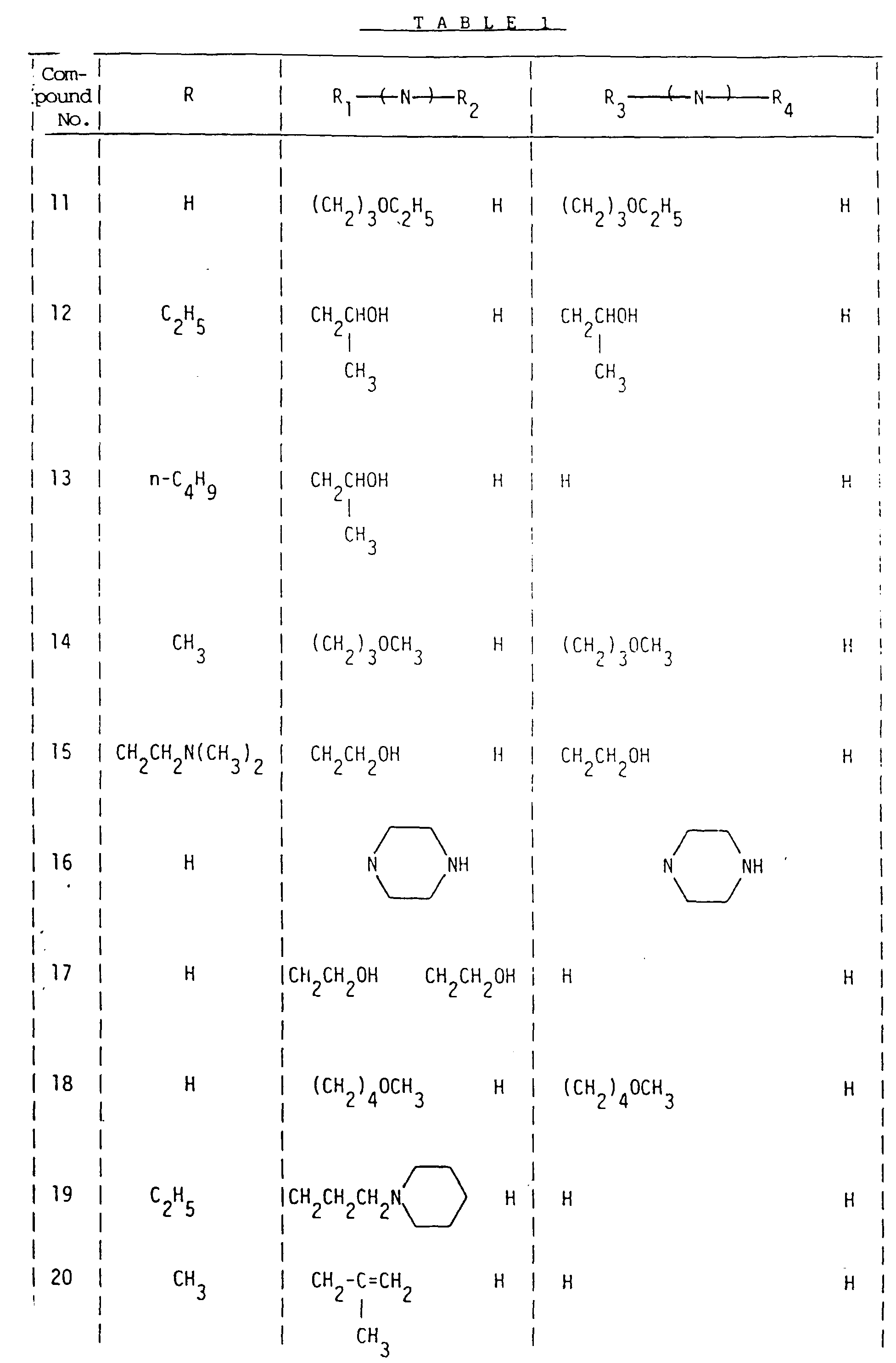

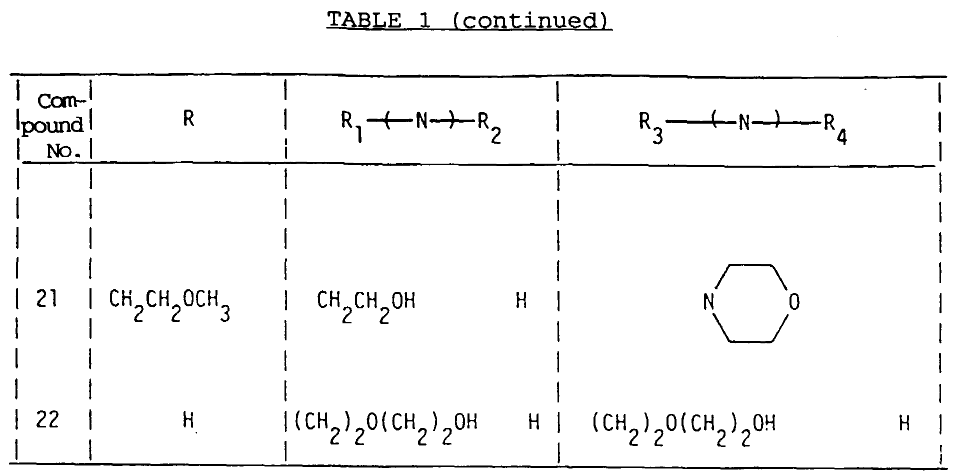

The following non-limitative examples are to further illustrate the present invention.

### EXAMPLE 1

Into a 2 l-reactor equipped with stirrer, thermometer, dropping funnel, condenser and cooling bath, there are placed 184.5 g of cyanuric acid chloride and 1300 ml of methylene chloride.

While cooling externally, 87.2 g of morpholine and 40 g of sodium hydroxide dissolved in 150 g of water are added simultaneously within 3 hours, keeping the pH between 5 and 7 and the temperature between 0 and 3°C.

The mixture is kept at 0 to 3°C for a further 3 hours and thereafter the aqeuous phase is separated.

Upon distillation of the methylene chloride, 230 g of the intermediate of formula (IX): 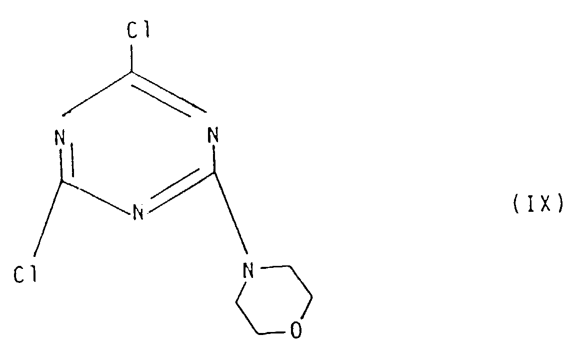 are obtained in the form of a white crystalline powder having a melting point (m.p.) of 155-157°C and a chlorine content of 30.12% (theor. = 30.21%).

In a 1 l-reactor equipped with stirrer, thermometer, feeding funnel, cooler and heating bath, there are introduced 300 ml of water, 30.5 g of 2-hydroxyethylamine and, under stirring, 117.5 g of the intermediate (IX).

The temperature is gradually raised to 40°C; after 30 minutes the mixture is heated to 45°C and is kept at this temperature for about 3 hours.

Then the temperature is raised to 50°C and within 3 hours a solution of 20 g of sodium hydroxide in 100 ml of water is added.

The resulting mixture is kept at 50°C for a further 2 hours and thereafter is heated to 70°C and is allowed to further react at this temperature for 30 minutes.

After cooling to room temperature, the product formed is filtered off and washed on the filter with water.

After drying of the cake in an oven at 100°C, 120.3 g of the intermediate of formula (X): 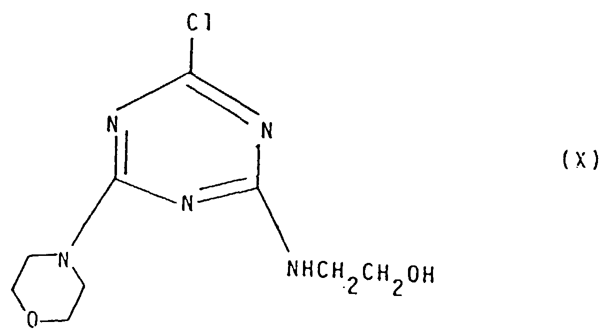 are obtained in the form of a white crystalline powder the m.p. of which is 172-173°C and the chlorine content of which is 13.51% (theor.: 13.68%).

The structure of the intermediates (IX) and (X) was further confirmed by IR spectroscopic analysis.

The same 1 l reactor is charged with 500 ml of water, 103.8 g of the intermediate (X) and 79 g of a 37% by weight solution of hydrochloric acid.

The mass is heated to 90°C and is kept at this temperature for 3 hours. Then the solution is cooled to 50°C and is neutralized by adding 48 g of sodium hydroxide dissolved in 80 ml of water.

The resulting mixture is cooled to 5°C and the product formed is filtered and washed on the filter with cold water.

Upon drying the filter cake in an oven at 100°C, 84.7 g of the product of formula 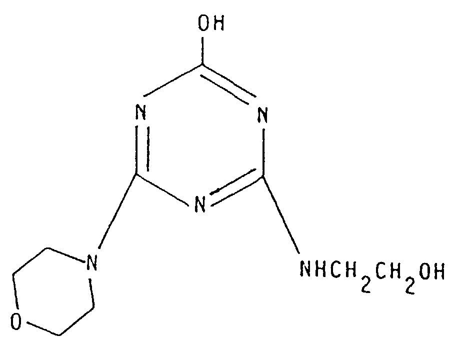 are obtained in the form of a white crystalline powder; m.p. = 251-253°C.

### EXAMPLE 2

Into a 2 l-reactor, equipped as in example 1, 800 ml of methanol, 100 ml of water and 151.2 g of sodium bicarbonate are introduced.

The mixture is cooled to 10°C and then 166 g of cyanuric acid chloride are added.

The temperature is allowed to rise up to 30°C and is kept at this value for about 1 hour, until completion of the carbon dioxide evolution.

The heat of reaction itself is sufficient for maintaining the desired temperature.

Then the reaction mixture is cooled to 5°C and thereafter 800 ml of cold water are added. The product formed is filtered off and washed on the filter with cold water.

Upon drying the cake in an oven under vacum at 60°C, 123.8 g of the intermediate of formula (XI): 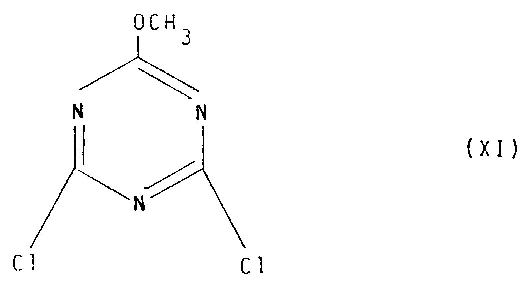 are obtained in the form of a white crystalline powder; m.p. = 90-92°C; chlorine content 39.27% (theor. 39.44%).

In a 1 l-reactor, equipped as in example 1, 400 ml of water and 108 g of the intermediate (XI) are introduced.

While cooling externally to 0-5°C, 100 g of a 30% by weight aqueous ammonia solution are added within about 1 hour while keeping the temperature at 0 to 5°C. Then the temperature is allowed to rise spontaneously to room temperature and this value is maintained for 2 hours.

The resulting mixture is cooled to 10°C and the product formed is filtered off and washed with cold water. By drying the cake in an oven at 100°C, 82.3 g of the intermediate of formula (XII): 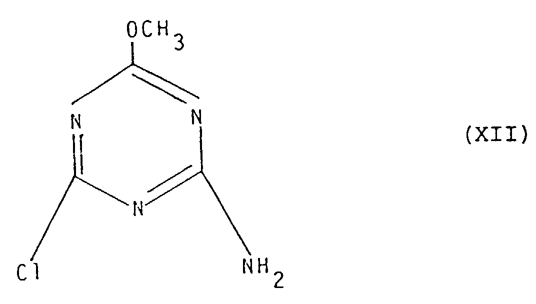 are obtained in the form of a white crystalline powder; m.p. >300°C; chlorine content 21.96% (theor.: 22.12%).

The structure of intermediates (XI) and (XII) was further confirmed by NMR analysis.

In the same 1 l-reactor, but provided with a heating bath, 300 ml of toluene, 80.2 g of the intermediate (XII) and 90 g of morpholine are introduced.

The mixture is heated to 60 to 65°C and is kept at this temperature for 2 hours; thereafter the mixture is heated to reflux and is kept in this condition for 1 hour.

After having allowed the mixture to cool to room temperature, the product formed is separated by filtration.

The cake is thoroughly washed with water and, after drying, 90.3 g of the product of formula 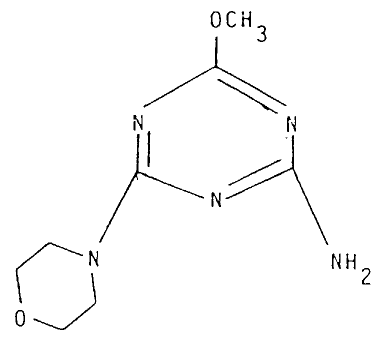 are obtained in the form of a white crystalline powder; m.p. = 182-184°C.

### EXAMPLE 3

In a 1 l-reactor, equipped as in example 2, 400 ml of water, 63.3 g of the product of example 2 as well as 59.1 g of a 37% by weight hydrochloric acid solution are placed.

The mixture is heated to boiling and kept under reflux for 2 hours.

After cooling to 80°C, 24 g of sodium hydroxide dissolved in 100 ml of water are added.

The resulting mixture is allowed to cool to room temperature, then the product formed is filtered off and washed on the filter with water.

Upon drying the cake in an oven at 100°C, 54.7 g of the product of formula: 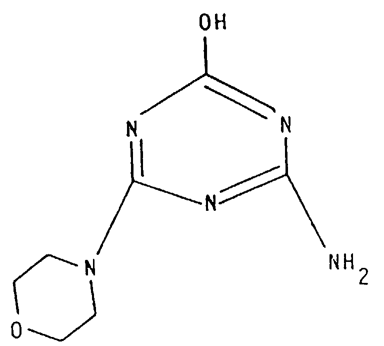 are obtained in the form of a white crystalline powder; m.p. >300°C.

### EXAMPLE 4

600 ml of water and 184.5 g of cyanuric acid chloride are placed in a 2 l reactor equipped as in example 1.

While externally cooling to 2°C, 122.5 g of 2-hydroxyethylamine in 100 ml of water are added within 2 hours; during the addition the temperature is allowed to gradually rise up to 5 to 7°C.

Then the temperature is raised to 20°C and is kept at this value for 1 hour; thereafter the whole mixture is heated to 35 to 40°C and 80 g of sodium hydroxide (dissolved in 200 ml of water) are added within about 3 hours.

The reaction mass is heated to 60°C and is kept at this temperature for 2 hours, whereafter it is cooled to room temperature and the product formed thereby is filtered off and washed on the filter with water.

By drying the cake in an oven at 100°C, 203.1 g of the intermediate of formula (XIII): 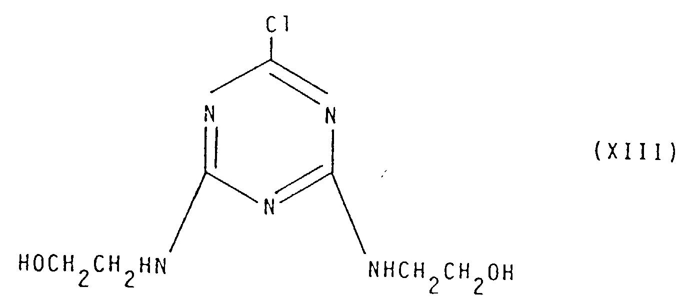 are obtained in the form of a white crystalline powder; m.p. = 188-190°C; chlorine content 15.33% (theor. 15.20%).

The structure of the intermediate (XIII) was further confirmed by IR spectroscopic analysis.

400 ml of water, 13 g of sodium hydroxide and 70.1 g of the intermediate (XIII) are placed in a 1 l stainless steel reactor equipped as in example 1.

The mixture is then heated to 150°C and is kept at this temperature for about 10 hours.

Thereafter the reaction mass is cooled to room temperature and the product formed is filtered and washed on the filter with water.

By drying the cake in an oven at 100°C, 57.7 g of the product of formula 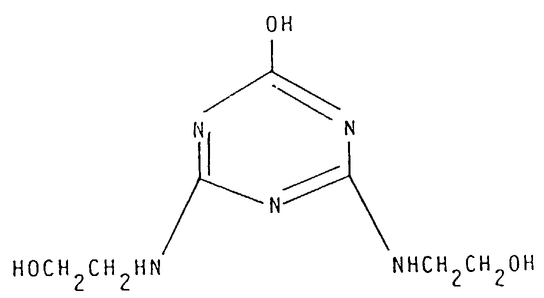 are obtained in the form of a white crystalline powder; m.p. >300°C.

### EXAMPLE 5

1000 ml of methylene chloride, 129.1 g of cyanuric acid chloride, 51.2 g of tert-butylamine and 28 g of sodium hydroxide dissolved in 100 ml of water are placed in the 2 l-reactor described in example 1.

By working as described in example 1, after having distilled off the solvent, 148 g of the intermediate of formula (XIV): 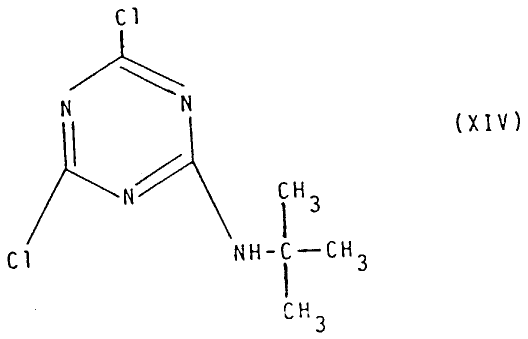 are obtained in the form of a white crystalline powder; m.p. = 129-130°C; chlorine content 31.87% (theor. 32.13%).

500 ml of chloroform, 110.5 g of the intermediate (XIV) and 30.5 g of 2-hydroxyethylamine, dissolved in 80 ml of water, are placed in a 1 l-reactor equipped as in the preceding examples.

The mixture is heated to boiling and kept under reflux for 3 hours; thereafter, a solution of 20 g of sodium hydroxide in 70 ml of water is added within 2 hours.

The mixture is kept under reflux for a further hour and then is cooled to room temperature by separating the organic phase.

The solvent is distilled off and the distillation residue is treated with 500 ml of water in the same 1 l-reactor.

The product is heated to 50 to 60°C until a good dispersion is obtained and thereafter the mixture is cooled to room temperature and the product formed is separated by filtration.

The filter cake is washed with water and dried in an oven at 80°C.

106.7 g of the intermediate of formula (XV): 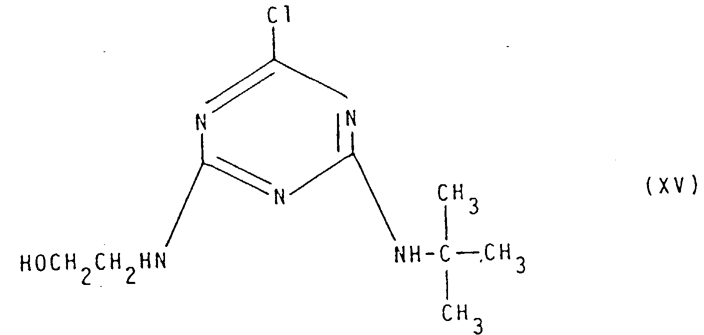 are obtained in the form of a white crystalline powder; m.p. = 134-135°C; chlorine content 14.32% (theor. 14.46%).

The structure of intermediates (XIV) and (XV) was further confirmed by NMR analysis.

500 ml of water, 98.2 g of the intermediate (XV) and 20.5 g of 96% by weight sulfuric acid are placed in the same 1 l-reactor.

The reaction mass is heated to 85°C and is kept at this temperature for 2 hours.

Thereafter, 32 g of sodium hydroxide, dissolved in 100 ml of water, are added within 30 minutes.

The resulting mixture is kept at 85°C for a further 30 minutes and thereafter is cooled to room temperature; the product formed is filtered and washed on the filter.

Upon drying the cake in an oven at 100°C, 83.2 g of the product of formula 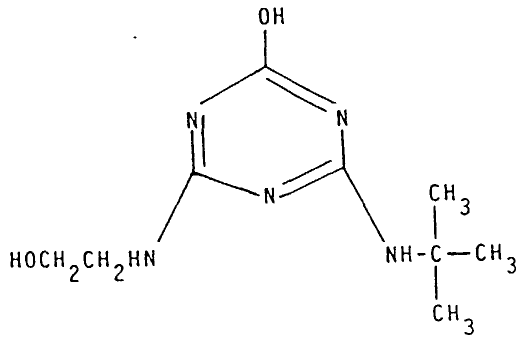 are obtained in the form of a white crystalline powder; m.p. >300°C.

### EXAMPLE 6

600 ml of water and 184.5 g of cyanuric acid chloride are introduced in a 2 l-reactor equipped as described in example 1.

While cooling from the outside to 0 to 2°C, 75 g of 2-methoxyethylamine are added within 1.5 hours.

Subsequently, 40 g of sodium hydroxide, dissolved in 250 ml of water, are introduced within 2 hours, always maintaining the temperature at 0-2°C.

The mass is kept under stirring for a further hour at the same temperature, then the product formed is separated by filtration and washed on the filter with water.

By drying in oven under vacuum at 60°C, 178.9 g of the intermediate of formula (XVI): 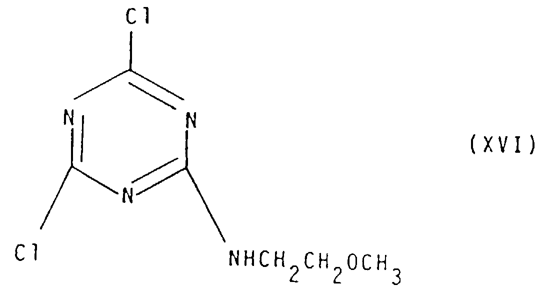 are obtained in the form of a white crystalline powder; m.p. = 73-75°C; chlorine content 31.68% (theor. 31.84%).

In a 1 l-reactor, equipped as in example 1, there are introduced 85 g of a 30% by weight aqueous ammonia solution, 250 ml of water and 111.5 g of intermediate (XVI).

The mixture is first heated to 40°C, keeping this temperature for 4 hours, then to 55°C for 2 hours. Thereafter the reaction mass is cooled to 10°C and the product formed is filtered and washed on the filter with water.

By drying the cake in oven at 100°C, 98 g of the intermediate of formula (XVII): 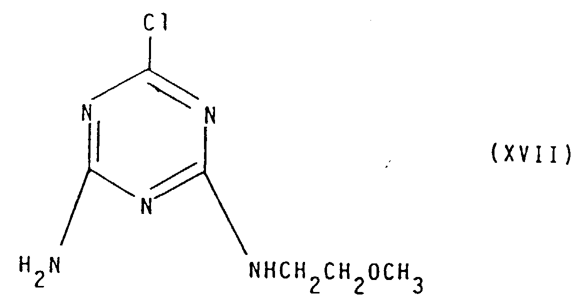 are obtained in the form of a white crystalline powder; m.p. = 195-197°C; chlorine content 17.21% (theor. 17.44%).

The structure of intermediates (XVI) and (XVII) was further confirmed by IR spectroscopic analysis. 400 ml of water, 81.4 g of the intermediate (XVII) and 42.3 g of a 37% by weight hydrochloric acid are placed in the same 1 l-reactor.

The mixture is heated to 80°C and is kept at this temperature for 2 hours.

Thereafter, 44.2 g of sodium carbonate, dissolved in 200 ml of water, are added, always at 80°C.

The reaction mass is then cooled to room temperature and the product formed is filtered and washed on the filter with water.

By drying the cake in an oven at 100°C, 68.1 g of the product of formula 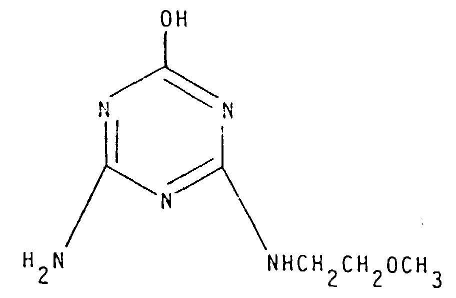 are obtained in the form of a white crystalline powder having a melting point of >300°C.

### EXAMPLE 7

400 ml of methanol are introduced in a 1 l-reactor equipped as in the preceding examples and, while keeping the temperature at 15 to 20°C, 17.6 g of sodium hydroxide are added.

The mixture is kept under stirring until the dissolution of the sodium hydroxide is complete, whereafter 103.8 g of the intermediate (X) are added.

The resulting mixture is heated to boiling and is kept under reflux for 4 hours.

Then most of the solvent (about 350 ml) is distilled off and the residue of the distillation is treated with 200 ml of water.

The product formed is filtered and washed on the filter with water.

By drying the cake in an oven at 100°C 88.7 g of the product of formula 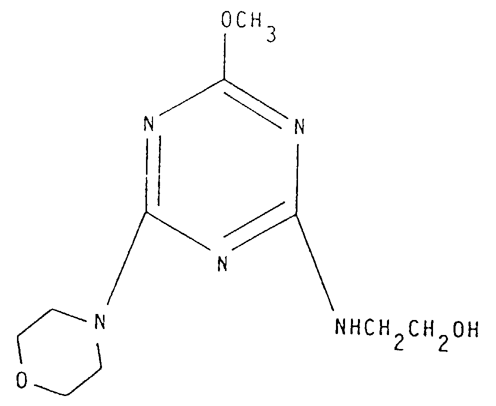 are obtained in the form of a white crystalline powder; m.p. = 136-138°C.

### EXAMPLES 8 TO 24

By working under conditions analogous to those described in examples 1 to 7, the compounds of general formula (I) listed in Table 2 below are prepared.

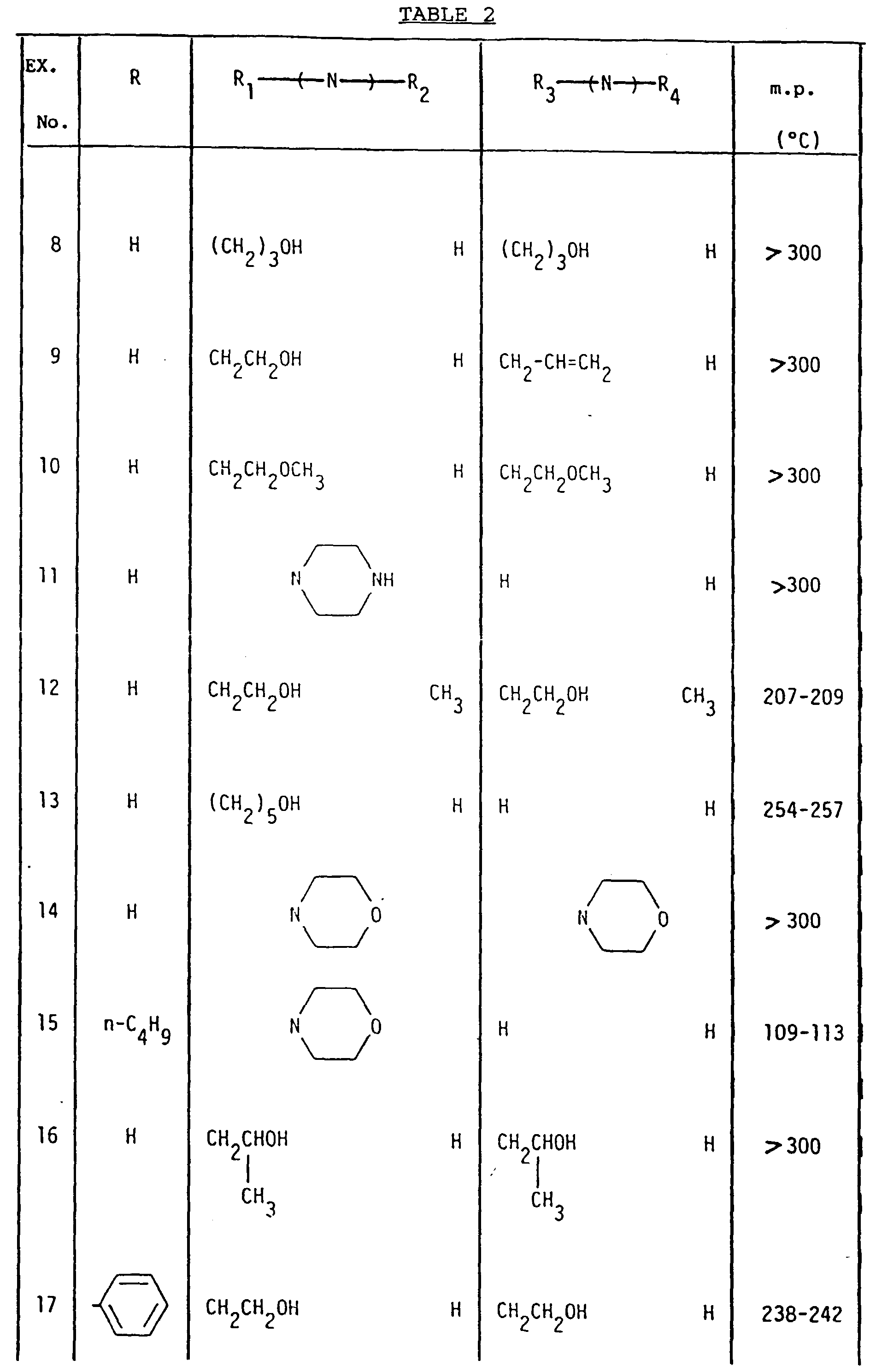

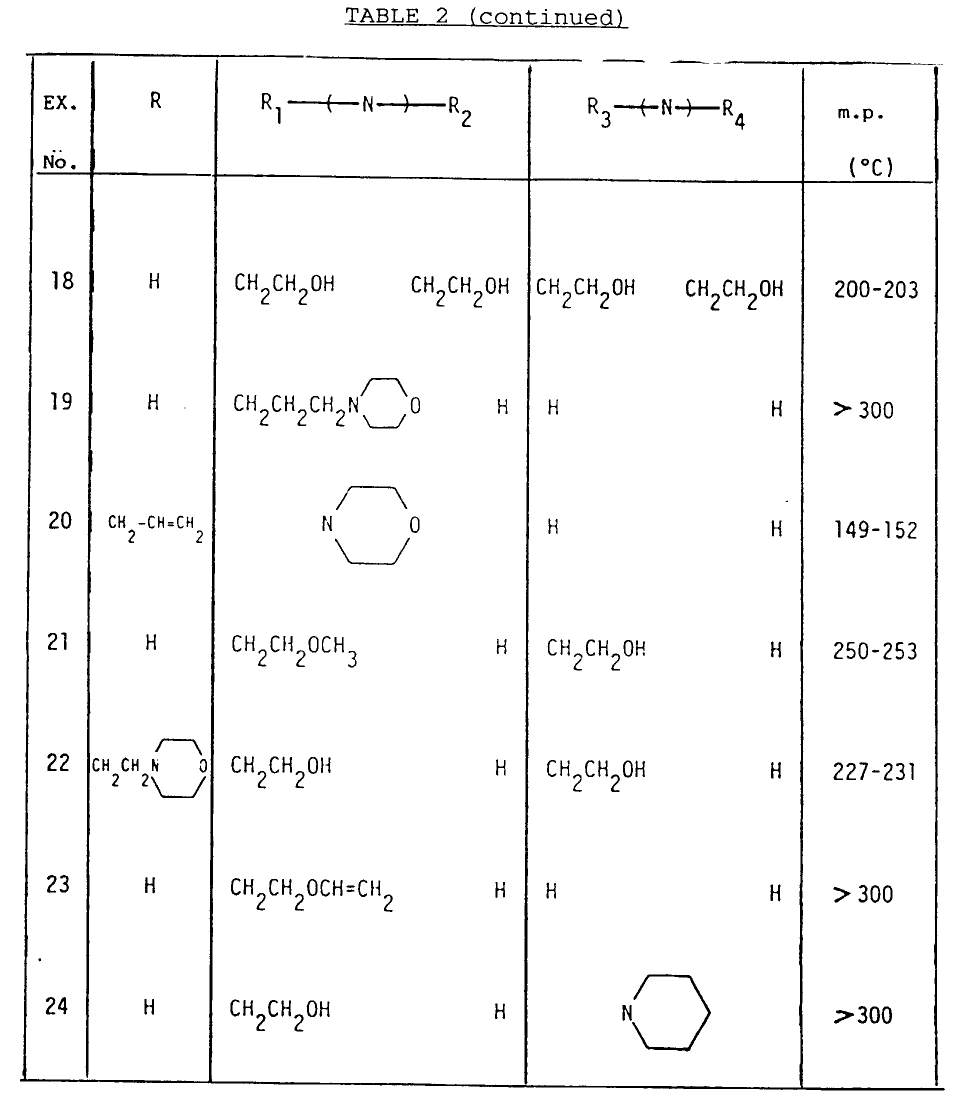

### EXAMPLES 25 TO 73

The tests reported in the following Tables 3 and 4 relate to polymeric compositions containing the products of general formula (I) prepared according to the preceding examples.

Specimen having the shape of small slabs of about 3 mm of thickness were prepared by moulding mixtures of granular polymer and additives on a MOORE platen press, with a moulding cycle of 7 minutes and a moulding pressure of about 40 kg/cm².

On the slab specimen thus obtained the level of self-extinguishment was determined by measuring the oxygen index (L.O.I. according to ASTM D-2863-77 in a Stanton Redcroft instrument) and by applying the "Vertical Burning Test" which makes it possible to classify the material according to three rating levels (94 V-O, 94 V-1 and 94 V-2) according to the UL 94 standard (issued by Underwriters Laboratories - U.S.A.).

In Table 3 the values which were obtained by using an isotactic polypropylene in flake form and having a melt flow index of 12 and an insoluble fraction in boiling n-heptane of 96% by weight are reported.

In Table 4 there are reported the values which were obtained by using low-density polyethylene in granular form with a melt flow index of 7; polystyrene granules containing 5% by weight of butadiene rubber and having a melt flow index of 9; thermoplastic polyurethane granules, of polyester grade (ESTANE 54600 ® by Goodrich) or of polyether grade (ESTANE 58300 ® by Goodrich), having respective specific gravities of 1.19 and 1.10 g/cm³; an ethylene-propylene elastomeric copolymer containing 45% by weight of propylene; and an acrylonitrile-butadiene-styrene terpolymer having a specific gravity of 1.06 g/cm³ and a melt flow index of 1.6, and containing about 40% of each acrylonitrile and styrene and 20% butadiene.

**TABLE 3**

| Example No. | Product Example No. | PARTS BY WEIGHT | | | | L.O.I. (ASTM D2863) | UL 94 3 mm |
|---|---|---|---|---|---|---|---|
| | | Product | PP (1) | AO (2) | APP (1) | | |
| 25 | 1 | 7.4 | 73 | 1 | 18.6 | 33.8 | V0 |
| 26 | 2 | 8.3 | 70 | 1 | 20.7 | 34.6 | V0 |
| 27 | 3 | 16.0 | 75 | 1 | 8.0 | 29.5 | V1 |
| 28 | 4 | 4.2 | 78 | 1 | 16.8 | 31.8 | V0 |
| 29 | 5 | 6.9 | 75 | 1 | 17.1 | 31.4 | V1 |
| | | | | | | | |
| 30 | 6 | 8.0 | 75 | 1 | 16.0 | 33.3 | V0 |
| 31 | 7 | 8.3 | 70 | 1 | 20.7 | 34.7 | V0 |
| 32 | 8 | 7.2 | 70 | 1 | 21.8 | 37.1 | V0 |
| 33 | 9 | 8.3 | 70 | 1 | 20.7 | 33.8 | V0 |
| 34 | 10 | 7.2 | 70 | 1 | 21.8 | 36.5 | V0 |
| 35 | 11 | 6.9 | 75 | 1 | 17.1 | 30.8 | V0 |
| 36 | 12 | 6.8 | 75 | 1 | 17.2 | 31.4 | V0 |
| 37 | 13 | 9.7 | 70 | 1 | 19.4 | 32.1 | V1 |
| 38 | 14 | 6.8 | 75 | 1 | 17.2 | 34.6 | V0 |
| 39 | 15 | 8.3 | 70 | 1 | 20.7 | 31.8 | V1 |
| | | | | | | | |
| 40 | 16 | 6.0 | 75 | 1 | 18.0 | 34.7 | V0 |
| 41 | 17 | 8.3 | 70 | 1 | 20.7 | 32.3 | V1 |
| 42 | 18 | 6.0 | 75 | 1 | 18.0 | 34.3 | V0 |
| 43 | 19 | 12.0 | 75 | 1 | 12.0 | 31.3 | V0 |
| 44 | 20 | 8.3 | 70 | 1 | 20.7 | 32.4 | V0 |
| 45 | 21 | 6.8 | 75 | 1 | 17.2 | 32.7 | V0 |
| 46 | 22 | 8.3 | 70 | 1 | 20.7 | 34.7 | V0 |
| 47 | 23 | 8.0 | 75 | 1 | 16.0 | 33.6 | V0 |
| 48 | 24 | 7.2 | 70 | 1 | 21.8 | 32.9 | V0 |
| 49 | 3 | 8.0 | 75 | 1 | 16.0* | 31.5 | V0 |
| | | | | | | | |
| 50 | 6 | 6.0 | 75 | 1 | 18.0* | 34.1 | V0 |
| 51 | 4 | 6.0 | 75 | 1 | 18.0③ | 30.5 | V0 |
| 52 | 16 | 6.8 | 75 | 1 | 17.2④ | 31.8 | V0 |

| | | | | | | | |
|---|---|---|---|---|---|---|---|
| (1) PP = polypropylene APP = ammonium polyphosphate Exolit® 422 (Hoechst) | | | | | | | |
| * APP = ammonium polyphosphate microincapsulated with melamine-formaldehyde resin Exolit® 462 (Hoechst) | | | | | | | |
| (2) AO = antioxidant Mixture consisting of two parts of dilauryl thiopropionate and 1 part of pentaerythritol tetra[3-(3,5-di-tert-butyl-4-hydroxyphenyl)-propionate] | | | | | | | |
| (3) monoammonium salt of 1-aminoethane-1,1-diphosphonic acid | | | | | | | |
| (4) monoammonium salt of 1-hydroxyethane-1,1-diphosphonic acid. | | | | | | | |

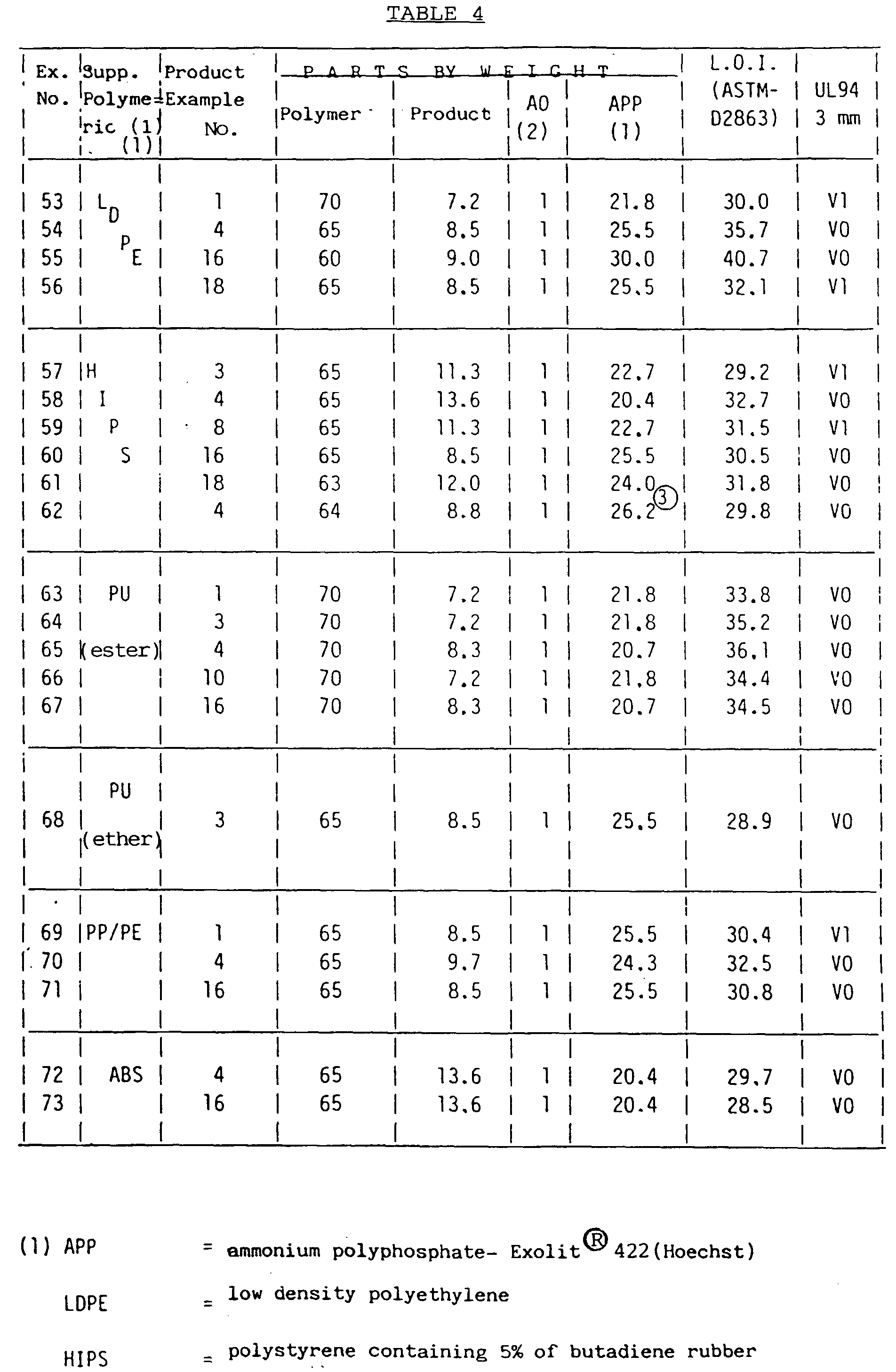

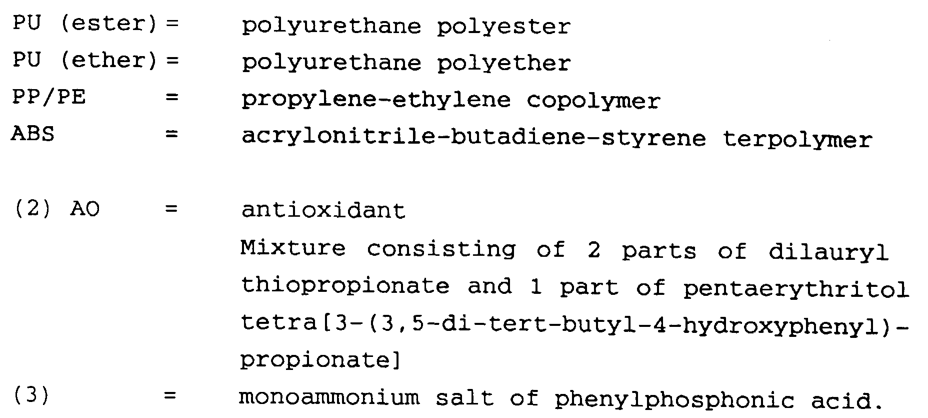

### EXAMPLE 74 (comparison example)

By working according to the procedure used in examples 25 to 52, but using as nitrogen containing compound 2,4-diamino-6-hydroxy-1,3,5-triazine, the composition specified hereinafter is prepared:

| | |
|---|---|
| Polypropylene | 72 parts by weight |
| Antioxidant | 1 part by weight |
| Ammonium polyphosphate | 19.3 parts by weight |
| 2,4-diamino-6-hydroxy-1,3,5-triazine | 7.7 parts by weight |

Using the above mentioned composition specimens are prepared which are subjected to the self-extinguishing tests described above.

The following results are obtained:
L.O.I. = 23.8
UL 94 (3 mm): class B (the specimen burns).

## Claims

1. Self-extinguishing polymeric compositions comprising (in 100 parts by weight of composition):
a) from 91 to 40 parts by weight of thermoplastic polymer and/or of polymer showing elastomeric properties;
b) from 6 to 33 parts by weight of one or more compounds selected from ammonium and amine phosphates and ammonium and amine phosphonates;
c) from 3 to 27 parts by weight of one or more 2,4-diamino-6-hydroxy-1,3,5-triazine derivatives of general formula (I): 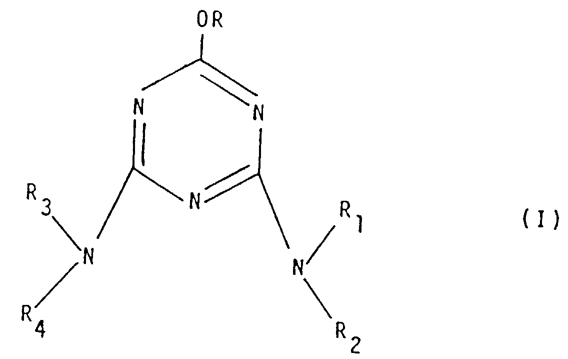
wherein:
R = H; (C₂-C₆)-alkenyl; (C₆-C₁₂)-cycloalkyl; (C₆-C₁₂)-alkylcycloalkyl;(C₆-C₁₂)-aryl; (C₇-C₁₂)-aralkyl; and ⁅CₙH₂ₙ⁆X,
n being an integer of from 1 to 8 and X being selected from H; CN; -O-(C₁-C₄)-alkyl;-O-(C₂-C₄)-alkenyl; (C₆-C₁₂)-cycloalkyl;(C₆-C₁₂)-alkylcycloalkyl; -O-(C₆-C₁₂)-aryl; moieties -N(R₅)₂ wherein the groups R₅, the same or different from each other, represent (C₁-C₄)-alkyl or (C₃-C₄)-alkenyl; or the moiety -N(R₅)₂ is replaced by an N-heterocyclic radical which optionally contains another heteroatom and is linked to the alkyl chain through the nitrogen atom;
(i) at least one of the groups R₁, R₂, R₃ and R₄ is selected from:
⁅CₘH₂ₘ⁆O-R₆;
and 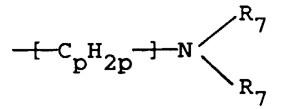 wherein
m = an integer of from 2 to 8;
p = an integer of from 2 to 6;
R₆ = H; (C₁-C₈)-alkyl; (C₂-C₆)-alkenyl; ⁅C_{q}H_{2q}⁆O-R₈, wherein q is an integer of from 1 to 4 and R₈ is hydrogen or (C₁-C₄)-alkyl; (C₆-C₁₂)-cycloalkyl or (C₆-C₁₂)-alkylcycloalkyl;
the groups R₇, the same or different from each other, represent H; (C₁-C₈)-alkyl; (C₂-C₆)-alkenyl; (C₁-C₄)-hydroxyalkyl; (C₆-C₁₂)-cycloalkyl and (C₆-C₁₂)-alkylcycloalkyl;
or the moiety -N(R₇)₂ is replaced by an N-heterocyclic radical which optionally contains another heteroatom and is linked to the alkyl chain through the nitrogen atom;
or (ii) in general formula (I) at least one of the moieties -NR₁R₂ and -NR₃R₄ is replaced by an N-heterocyclic radical which optionally contains another heteroatom and is linked to the triazine ring through the nitrogen atom;
the remaining groups R₁ to R₄, the same or different from each other, having the meanings mentioned under item (i) above or being selected from H; (C₁-C₁₈)-alkyl; (C₂-C₈)-alkenyl;
(C₆-C₁₆) -cycloalkyl and (C₆-C₁₆)-alkylcycloalkyl, optionally substituted by a hydroxy or (C₁-C₄)-hydroxyalkyl group.

2. Compositions according to claim 1, wherein at least one of the moieties -NR₁R₂ and -NR₃R₄ in general formula (I) is replaced by a heterocyclic radical selected from aziridyl, pyrrolidyl, piperidyl; morpholyl; thiomorpholyl, piperazyl; 4-methylpiperazyl; 4-ethylpiperazyl; 2-methylpiperazyl; 2,5-dimethylpiperazyl; 2,3,5,6-tetramethylpiperazyl; 2,2,5,5-tetramethylpiperazyl; 2-ethylpiperazyl and 2,5-diethylpiperazyl.

3. Compositions according to any one of claims 1 and 2, wherein at least one of the groups R₁ to R₄ in general formula (I) is a group of formula
⁅CₘH₂ₘ⁆O-R₆
wherein
m = an integer of from 2 to 4 and
R₆ is hydrogen or (C₁-C₄)-alkyl.

4. Compositions according to any one of claims 1 to 3, wherein the moiety -N(R₅)₂ is replaced by a heterocyclic radical selected from pyrrolidyl; piperidyl; morpholyl; thiomorpholyl; piperazyl; 4-methylpiperazyl and 4-ethylpiperazyl.

5. Compositions according to any one of claims 1 to 4, wherein the moiety -N(R₇)₂ is replaced by a heterocyclic radical selected from aziridyl; pyrrolidyl; piperidyl; morpholyl; thiomorpholyl; piperazyl; 4-methylpiperazyl and 4-ethylpiperazyl.

6. Compositions according to any one of claims 1 to 3 and 5 wherein R in general formula (I) represents hydrogen or
⁅CₙH₂ₙ⁆X
wherein
n is an integer of from 1 to 4 and
X is hydrogen.

7. Compositions according to any one of claims 1 to 6, wherein the ammonium phosphates (b) have the general formula (NH₄)ₙ₊₂PₙO₃ₙ₊₁ wherein n is an integer of at least 2; or have the general formula (NH₄PO₃)ₙ wherein n ranges from 50 to 500.

8. Compositions according to any one of claims 1 to 7, wherein the amine phosphates (b) are selected from dimethylammonium phosphate; diethylammonium phosphate; ethylenediamine phosphate; melamine ortho-phosphate; melamine pyrophosphate; and mixtures thereof.

9. Compositions according to any one of claims 1 to 8, wherein the ammonium phosphonates (b) are the mono- and polysubstituted ones and are selected from salts derived from mono- and polyphosphonic acids.

10. Compositions according to any one of claims 1 to 9, wherein the polymer (a) is selected from acrylonitrile/butadiene/styrene (ABS) terpolymers; styrene/acrylonitrile (SAN) copolymers; polyurethanes; poly(ethyleneterephthalate); poly(butylene terephthalate); polyamides; and polymers and copolymers of olefins of general formula R'-CH=CH₂ wherein R' is hydrogen, a (C₁-C₈)-alkyl or (C₆-C₁₀)-aryl group, particularly:
(1) isotactic or prevailingly isotactic polypropylene;
(2) HDPE, LLDPE and LDPE polyethylene;
(3) crystalline copolymers of propylene and minor amounts of ethylene and/or other alpha-olefins, such as butene-1, hexene-1, octene-1 and 4-methylpentene-1;
(4) heterophasic compositions comprising (A) a fraction of propylene homopolymer or of propylene copolymers as specified under (3) and (B) a copolymeric fraction composed of elastomeric copolymers of ethylene and an alpha-olefin, optionally containing minor amounts of a diene, wherein the alpha-olefin is preferably selected from propylene and butene-1;
(5) elastomeric copolymers of ethylene and alpha-olefin(s) optionally containing minor amounts of diene.

11. Molded articles, obtained from compositions according to any one of claims 1 to 10.

## Patentansprüche

1. Selbstverlöschende polymere Zusammensetzungen, umfassend in 100 Gewichtsteilen Zusammensetzung:
a) 91 bis 40 Gewichtsteile thermoplastisches Polymer und/oder Polymer, das elastomere Eigenschaften zeigt;
b) 6 bis 33 Gewichtsteile einer oder mehrerer Verbindungen, die aus Ammonium- und Aminphosphaten und Ammonium- und Aminphosphonaten ausgewählt sind;
c) 3 bis 27 Gewichtsteile eines oder mehrerer 2,4-Diamino-6-hydroxy-1,3,5-triazin-Derivate der allgemeinen Formel (I): 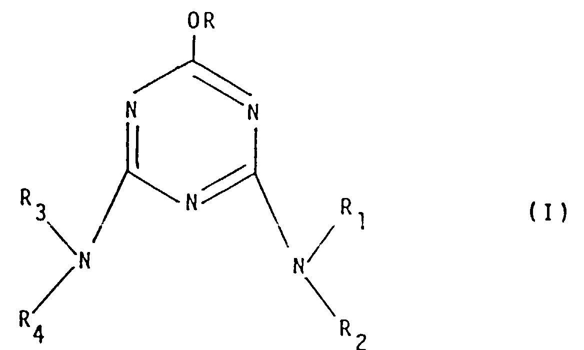 worin:
R = H; (C₂-C₆)-Alkenyl; (C₆-C₁₂)-Cycloalkyl; (C₆-C₁₂)-Alkylcycloalkyl; (C₆-C₁₂)-Aryl; (C₇-C₁₂)-Aralkyl; und ⁅CₙH₂ₙ⁆X, wobei n eine ganze Zahl von 1 bis 8 ist und X ausgewählt ist aus H; CN; -O-(C₁-C₄)-Alkyl; -O-(C₂-C₄)-Alkenyl; (C₆-C₁₂)-Cycloalkyl; (C₆-C₁₂)-Alkylcycloalkyl; -O-(C₆-C₁₂)-Aryl; Einheiten -N(R₅)₂, worin die Gruppen R₅, gleich oder verschieden voneinander, (C₁-C₄)-Alkyl oder (C₃-C₄)-Alkenyl darstellen; oder die Einheit -N(R₅)₂ durch einen N-heterocyclischen Rest ersetzt ist, der gegebenenfalls ein weiteres Heteroatom enthält und über das Stickstoffatom an die Alkylkette geknüpft ist;
(i) mindestens eine der Gruppen R₁, R₂, R₃ und R₄ ausgewählt ist aus:
⁅CₘH₂ₘ⁆O-R₆;
und 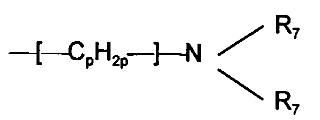 worin
m = eine ganze Zahl von 2 bis 8;
p = eine ganze Zahl von 2 bis 6;
R₆ = H; (C₁-C₈)-Alkyl; (C₂-C₆)-Alkenyl; ⁅C_{q}H_{2q}⁆O-R₈, worin q eine ganze Zahl von 1 bis 4 ist und R₈ Wasserstoff oder (C₁-C₄)-Alkyl; (C₆-C₁₂)-Cycloalkyl oder (C₆-C₁₂)-Alkylcycloalkyl ist;
die Gruppen R₇, gleich oder verschieden voneinander, für H; (C₁-C₈)-Alkyl; (C₂-C₆)-Alkenyl; (C₁-C₄)-Hydroxyalkyl; (C₆-C₁₂)-Cycloalkyl und (C₆-C₁₂)-Alkylcycloalkyl stehen;
oder die Einheit -N(R₇)₂ durch einen N-heterocyclischen Rest ersetzt ist, der gegebenenfalls ein weiteres Heteroatom enthält und über das Stickstoffatom an die Alkylkette geknüpft ist;
oder (ii) in der allgemeinen Formel (I) mindestens eine der Einheiten -NR₁R₂ und -NR₃R₄ durch einen N-heterocyclischen Rest ersetzt ist, der gegebenenfalls ein weiteres Heteroatom enthält und durch das Stickstoffatom an den Triazin-Ring geknüpft ist;
wobei die verbleibenden Gruppen R₁ bis R₄, gleich oder verschieden voneinander, die unter Punkt (i) oben erwähnten Bedeutungen aufweisen oder ausgewählt sind aus H; (C₁-C₁₈)-Alkyl; (C₂-C₈)-Alkenyl; (C₆-C₁₆)-Cycloalkyl und (C₆-C₁₆)-Alkylcycloalkyl, gegebenenfalls substituiert durch eine Hydroxy- oder (C₁-C₄)-Hydroxyalkylgruppe.

2. Zusammensetzungen nach Anspruch 1, in welchen mindestens eine der Einheiten -NR₁R₂ und -NR₃R₄ in der allgemeinen Formel (I) durch einen heterocyclischen Rest ersetzt ist, der ausgewählt ist aus Aziridyl, Pyrrolidyl, Piperidyl,; Morpholyl; Thiomorpholyl, Piperazyl; 4-Methylpiperazyl; 4-Ethylpiperazyl; 2-Methylpiperazyl; 2,5-Dimethylpiperazyl; 2,3,5,6-Tetramethylpiperazyl; 2,2,5,5-Tetramethylpiperazyl; 2-Ethylpiperazyl und 2,5-Diethylpiperazyl.

3. Zusammensetzungen nach irgendeinem der Ansprüche 1 und 2, in welchen mindestens eine der Gruppen R₁ bis R₄ in der allgemeinen Formel (I) eine Gruppe der Formel
⁅CₘH₂ₘ⁆O-R₆
ist, worin
m = eine ganze Zahl von 2 bis 4 und
R₆ Wasserstoff oder (C₁-C₄)-Alkyl bedeutet.

4. Zusammensetzungen nach irgendeinem der Ansprüche 1 bis 3 , in welchen die Einheit -N(R₅)₂ durch einen heterocyclischen Rest ersetzt ist, der ausgewählt ist aus Pyrrolidyl; Piperidyl; Morpholyl; Thiomorpholyl; Piperazyl; 4-Methylpiperazyl und 4-Ethylpiperazyl.

5. Zusammensetzungen nach irgendeinem der Ansprüche 1 bis 4, in welchen die Einheit -N(R₇)₂ durch einen heterocyclischen Rest ersetzt ist, der ausgewählt ist aus Aziridyl; Pyrrolidyl; Piperidyl; Morpholyl; Thiomorpholyl; Piperazyl; 4-Methylpiperazyl und 4-Ethylpiperazyl.

6. Zusammensetzungen nach irgendeinem der Ansprüche 1 bis 3 und 5, in welchen R in der allgemeinen Formel (I) für Wasserstoff oder ⁅CₙH₂ₙ⁆X steht,
worin
n eine ganze Zahl von 1 bis 4 ist und
X für Wasserstoff steht.

7. Zusammensetzungen nach irgendeinem der Ansprüche 1 bis 6, in welchen die Ammoniumphosphate (b) die allgemeine Formel (NH₄)ₙ₊₂PₙO₃ₙ₊₁ aufweisen, worin n eine ganze Zahl von mindestens 2 bedeutet; oder die allgemeine Formel (NH₄PO₃)ₙ aufweisen, worin n im Bereich von 50 bis 500 liegt.

8. Zusammensetzungen nach irgendeinem der Ansprüche 1 bis 7, in welchen die Aminphosphate (b) ausgewählt sind aus Dimethylammoniumphosphat; Diethylammoniumphosphat; Ethylendiaminphosphat; Melaminorthophosphat; Melaminpyrophosphat; und Mischungen davon.

9. Zusammensetzungen nach irgendeinem der Ansprüche 1 bis 8, in welchen die Ammoniumphosphonate (b) die mono- und polysubstituierten sind und ausgewählt sind aus Salzen, die von Mono- und Polyphosphonsäuren abgeleitet sind.

10. Zusammensetzungen nach irgendeinem der Ansprüche 1 bis 9, in welchen das Polymer (a) ausgewählt ist aus Acrylnitril/Butadien/Styrol (ABS)-Terpolymeren; Styrol/Acrylnitril (SAN)-Copolymeren; Polyurethanen; Poly(ethylenterephthalat); Poly(butylenterephthalat); Polyamiden; und Polymeren und Copolymeren von Olefinen der allgemeinen Formel R'-CH=CH₂, worin R' für Wasserstoff, eine (C₁-C₈)-Alkyl- oder (C₆-C₁₀)-Arylgruppe steht, insbesondere:
(1) isotaktischem oder überwiegend isotaktischem Polypropylen;
(2) HDPE-, LLDPE- und LDPE-Polyethylen;
(3) kristallinen Copolymeren von Propylen und kleineren Mengen and Ethylen und/oder anderen alpha-Olefinen wie beispielsweise Buten-1, Hexen-1, Octen-1 und 4-Methylpenten-1;
(4) heterophasigen Zusammensetzungen, umfassend (A) eine Fraktion von Propylen-Homopolymer oder von Propylen-Copolymeren wie unter (3) angegeben und (B) eine copolymere Fraktion, die aus elastomeren Copolymeren von Ethylen und einem alpha-Olefin, gegebenenfalls kleinere Mengen an Dien enthaltend, worin das alpha-Olefin vorzugsweise aus Propylen und Buten-1 ausgewählt ist, zusammengesetzt sind;
(5) elastomeren Copolymeren von Ethylen und alpha-Olefin(en), die gegebenenfalls kleinere Mengen an Dien enthalten.

11. Formgegenstände, erhalten aus Zusammensetzungen nach irgendeinem der Ansprüche 1 bis 10.

## Revendications

1. Compositions polymères auto-extinctrices comprenant, pour 100 parties en poids de composition :
a) de 91 à 40 parties en poids d'un polymère thermoplastique et/ou d'un polymère présenant des propriétés élastiques;
b) de 6 à 33 parties en poids d'un ou de plusieurs composés choisis parmi les phosphates d'ammonium ou d'amine et les phosphonates d'ammonium ou d'amine,
c) de 3 à 27 parties en poids d'un ou de plusieurs dérivés de type 2,4-diamino-6-hydroxy-1,3,5,-triazine de formule générale (I): 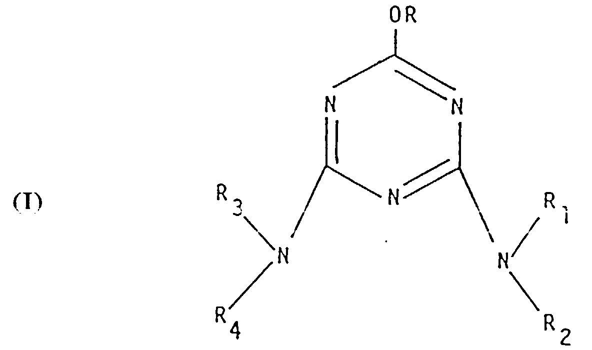 dans laquelle R représente un atome d'hydrogène, un résidu alcényle en C₂₋₆, cycloalkyle en C₆₋₁₂, alkylcycloalkyle en C₆₋₁₂, aryle en C₆₋₁₂, aralkyle en C₇₋₁₂ et -[CₙH₂ₙ]-X, où n est un nombre entier compris entre 1 et 8 et X est choisi parmi H, CN, -O-(alkyle en C₁₋₄), -O-(alcényle en C₂₋₄), cycloalkyle en C₆₋₁₂, alkylcycloalkyle en C₆₋₁₂, -O-(aryle en C₆₋₁₂), des résidus -N(R₅)₂ dans lesquels les groupes R₅, identiques ou différents, représentent un groupe alkyle en C₁₋₄ ou alcényle en C₃₋₄, ou le résidu -N(R₅)₂ est remplacé par un radical hétérocyclique azoté contenant éventuellement un autre hétéroatome et qui est lié à la chaîne alkyle par l'intermédiaire de l'atome d'azote;
(i) au moins un des groupes R₁, R₂, R₃ et R₄ est choisi parmi
⁅CₘH₂ₘ⁆O-R₆
et 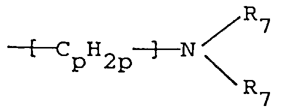 où
m est un nombre entier compris entre 2 et 8;
p est un nombre entier compris entre 2 et 6;
R₆ représente un atome d'hydrogène, un résidu alkyle en C₁₋₈, alcényle en C₂₋₆, -[C_{q}H_{2q}]-O-R₈, où q représente un nombre entier compris entre 1 et 4 et R₈ est un atome d'hydrogène ou un groupe alkyle en C₁₋₄, cycloalkyle en C₆₋₁₂ ou alkylcycloalkyle en C₆₋₁₂,
les groupes R₇, identiques ou différents, représentent un atome d'hydrogène, un groupe alkyle en C₁₋₈, alcényle en C₂₋₆, hydroxyalkyle en C₁₋₄, cycloalkyle en C₆₋₁₂ et alkylcycloalkyle en C₆₋₁₂, ou
le groupe -N(R₇)₂ est remplacé par un radical hétérocyclique azoté qui peut contenir un autre hétéroatome et qui est lié à la chaîne alkyle par l'intermédiaire de l'atome d'azote, ou
(ii) dans la formule générale (I) au moins un des résidus -NR₁R₂ et-NR₃R₄ est remplacé par un radical hétérocyclique azoté qui peut contenir un autre hétéroatome et qui est lié au cycle triazine par l'intermédiaire de l'atome d'azote,
les groupes R₁ à R₄ restants, identiques ou différents, ayant la signification indiquée ci-dessus sous (i) ou étant choisis parmi H, alkyle en C₁₋₁₈, alcényle en C₂₋₈, cycloalkyle en C₆₋₁₆ et alkylcycloalkyle en C₆₋₁₆, éventuellement substitué par un groupe hydroxy ou hydroxyalkyle en C₁₋₄.

2. Compositions conformes à la revendication 1 dans lesquelles au moins un des groupes -NR₁R₂ et -NR₃R₄ dans la formule générale (I) est remplacé par un radical hétérocyclique choisi parmi les résidus aziridyle, pyrrolidyle, pipéridyle, morpholyle, thiomorpholyle, pipérazyle, 4-méthylpipérazyle, 4-éthylpipérazyle, 2-méthylpipérazyle, 2,5-diméthylpipérazyle, 2,3,5,6-tétraméthylpipérazyle, 2,2,5,5,-tétraméthylpipérazyle, 2-éthylpipérazyle et 2,5-diéthylpipérazyle.

3. Compositions conformes à l'une quelconque des revendications 1 et 2, dans lesquelles au moins un des groupes R₁ à R₄ dans la formule générale (I) est un groupe de formule -[CₘH₂ₘ]-O-R₆
où m est un nombre entier compris entre 2 et 4 et
R₆ est un atome d'hydrogène ou un groupe alkyle en C₁₋₄.

4. Compositions conformes à l'une quelconque des revendications 1 à 3, dans lesquelles le résidu -N(R₅)₂ est remplacé par un radical hétérocyclique choisi parmi les résidus pyrrolidyle, pipéridyle, morpholyle, thiomorphyle, pipérazyle, 4-méthylpipérazyle et 4-éthylpipérazyle.

5. Compositions conformes à l'une quelconque des revendications 1 à 4 dans lesquelles le groupe -N(R₇)₂ est remplacé par un radical hétérocyclique choisi parmi les résidus aziridyle, pyrrolidyle, pipéridyle, morpholyle, thiomorpholyle, pipérazyle, 4-méthylpipérazyle et 4-éthylpipérazyle.

6. Compositions conformes à l'une quelconque des revendications 1 à 3 et 5 dans lesquelles R dans la formule générale (I) représente un atome d'hydrogène ou un groupe de formule -[CₙH₂ₙ]-X
où m est un nombre entier compris entre 1 et 4 et
X est un atome d'hydrogène.

7. Compositions conformes à l'une quelconque des revendications 1 à 6, dans lesquelles les phosphates d'ammonium (b) ont la formule générale (NH₄)ₙ₊₂PₙO₃ₙ₊₁ où n est un nombre entier au moins égal à 2, ou ont la formule générale (NH₄PO₃)ₙ où n est compris entre 50 et 500.

8. Compositions conformes à l'une quelconque des revendications 1 à 7 dans lesquelles les phosphates d'amine (b) sont choisis parmi le phosphate de diméthylammonium, le phosphate de diéthylammonium, le phosphate d'éthylènediamine, l'ortho-phosphate de mélamine, le pyrophosphate de mélamine, et des mélanges de ceux-ci.

9. Compositions conformes à l'une quelconque des revendications 1 à 8 dans lesquelles les phosphonates d'ammonium (b) sont les phosphonates mono- et polysubstitués et sont choisis parmi les sels dérivés d'acides mono- et polyphosphoniques.

10. Compositions conformes à l'une quelconque des revendications 1 à 9, dans lesquelles le polymère la) est choisi parmi les terpolymères acrylonitrile/butadiène/styrène (ABS); les copolymères styrène/acrylonitrile (SAN); les polyuréthanes; le poly(éthylène téréphtalate); le poly(butylène téréphtalate); les polyamides, et les polymères et copolymères d'oléfines de formule générale R'-CH=CH₂ où R' représente un atome d'hydrogène, un groupe alkyle en C₁₋₈ ou aryle en C₆₋₁₀, en particulier :
(1) du polypropylène isotactique ou majoritairement isotactique,
(2) du polyéthylène de type PE-HD, PE-BDL et PE-BD,
(3) des copolymères cristallins de propylène contenant de faibles quantités d'éthylène et/ou d'autres α-oléfines telles que le butène-1, l'hexène-1, l'octène-1 et le 4-méthylpentène-1,
(4) des compositions hétérophasiques comprenant
(A) une fraction d'un homopolymère ou copolymère de propylène comme ceux définis sous (3), et
(B) une fraction copolymère composées de copolymères élastomères d'éthylène et d'une α-oléfine, contenant éventuellement de faibles quantités d'un diène, où l'α-oléfine est choisie de préférence parmi le propylène et le butène-1;
(5) des copolymères elastomères d'éthylène et d'α-oléfine(s) pouvant contenir de faibles quantités d'un diène.

11. Articles moulés obtenus à partir de compositions conformes à l'une quelconque des revendications 1 à 10.
